# EUROPEAN PATENT APPLICATION

(11) **EP 3 387 901 A1**
(43) Date of publication of application: **17.10.2018**
(21) Application number: 18166685.0
(22) Date of filing: 10.04.2018
(51) Int. Cl.: A01K 27/00

(54) **METHOD TO MAKE AN ACCESSORY ARTICLE FOR PETS**

(30) Priority: 10.04.2017 IT 201700039367
(71) Applicant: Cortina Pet Soul S.r.l., 31100 Treviso (IT)
(72) Inventor: Ricchi, Paolo, 31100 Treviso (IT); Brusatin, Dario, 31100 Treviso (IT); Cinquegrani, Attilio, 31100 Treviso (IT)
(74) Representative: Zamprogno, Bruno

(57) **Abstract**

Accessory article (1) for pets provided with a strap (2) comprising a sleeve having an elongated shape having at least two longitudinal lateral strips, which are mutually superimposed so as to trap a tape (8) and are connected thereto along a predetermined coupling band (11). The tape (8) being provided with a first longitudinal lateral portion (8a) stably trapped between the two longitudinal lateral strips and a second longitudinal lateral portion (8b) that protrudes to the outside thereof. The longitudinal lateral strips being folded at least partially inside the sleeve so that said two pairs of longitudinal lateral strips, the first longitudinal lateral portions (8a) of the tapes (8) and the seam/s are arranged inside said sleeve so as to remain concealed, and the second longitudinal lateral portions (8b) of the tapes (8) are arranged on the outside of the sleeve.

## Description

### PRIORITY CLAIM

This application claims priority from Italian Patent Application No. 102017000039367 filed on April 10, 2017.

The invention relates to a method to make an accessory article and to the accessory article itself.

In particular, the invention concerns the production of a walking accessory article for animals, such as for example cats, dogs or similar pets, to which explicit reference will be made in the description below without because of this loosing in generality.

It is known that some accessory articles for pets, such as for example harnesses and collars for dogs, are made by means of straps, usually made of a plastic material, properly connected to one another based on the function to be fulfilled by the article.

Even though known accessory articles are capable of effectively fulfilling their function, recently the need has spread, on one side, to reduce the abrasion of the coat of the animal caused by the article and, on the other side, to improve its appearance.

The invention will now be described with reference to the accompanying drawings, showing a non-limiting embodiment thereof, wherein:
- Figure 1 is a schematic perspective view of an accessory article worn by an animal and manufactured according to the invention;
- Figure 2 is a plan view of the accessory article shown in Figure 1 in an open configuration;
- Figure 3 is a cross-section I-I of a strap of the accessory article shown in Figure 2;
- Figure 4 is a schematic perspective view, with sectional parts and parts removed for greater clarity, of a strap of the accessory article show in Figure 2;
- Figures 5 to 12 schematically show respective operating steps of the method to make the accessory article for pets shown in Figure 1.

The invention will now be described in detail with reference to the accompanying Figures, so as to allow a person skilled in the art to carry it out and to use it. Possible changes to the embodiments described will be immediately evident to skilled people and the generic principles described can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the principles and the features described and claimed herein.

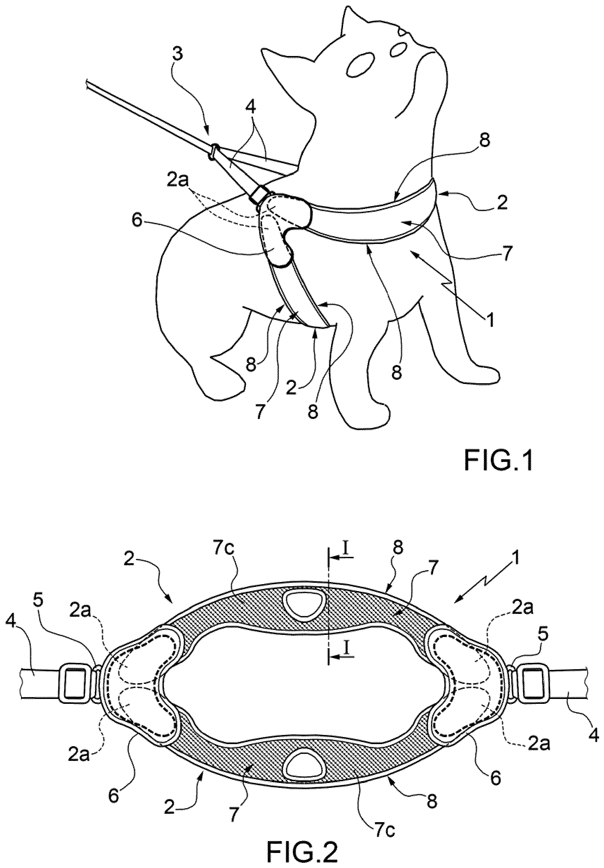

With reference to Figures 1 and 2, number 1 indicates, as a whole, an accessory article for pets. The accessory article 1 can correspond to a so-called "walking" article for pets and can preferably be worn by an animal, such as dog or a cat or any other type of similar pet.

In the example shown in Figure 1, the accessory article 1 corresponds to a dog harness. However, the invention is not limited to a dog harness, but it can also relate to other accessories generally used for walking pets, such as for example: a collar, a leash, a muzzle, an item of clothing that can be worn by the pet, an animal transportation bag.

In the example shown in Figures 1 and 2, the accessory 1 comprises a pair of bands forming respective straps 2, which are adapted to be fitted on the pet, for example a dog. In use, a strap 2 of the article 1 corresponding to a harness is adapted to be arranged approximately vertical so as to surround the part of the thorax of the animal immediately close to the front legs, whereas the other strap 2 is arranged approximately horizontal so as to surround the part of the chest of the animal arranged immediately under the neck.

According to the example shown in Figure 2, each strap 2 has the two distal ends 2a connected to the respective two distal ends 2a of the other strap 2, so as to form an annular body which, in use, is fitted on the animal so as to surround the chest with the first strap 2 and the thorax with the second strap 2. The accessory 1 can comprise, furthermore, a closing member 3, which is connected to the straps 2 and is adapted to be operated so as to allow the user to close and/or adjust the degree of tightening of the straps 2 around the chest and the thorax of the pet. The closing member 3 can be structured so as to mutually couple the two pairs of ends 2a of the straps 2, so that they are connected to/disconnected from one another, and so as to be manually operated in order to adjust the distance between each pair of ends relative to the other pair. The closing member 3 is known and it will not be described any further, except for the fact that it can be connected to the straps 2 by means of belts 4 and/or clasps (not shown) and/or connection rings 5.

According to Figures 1 and 2, the accessory 1 can comprise a pair of belts 3 connected to the respective pairs of ends 2a of the straps 2 through connection rings 5.

With reference to the example shown in Figures 1 and 2, the accessory article 1 can preferably be provided with a series of patches 6, each connected/stitched to and/or coating/covering on the surface the two ends 2a of the straps 2. The patches 6 cane be made, for example, of a plastic material or of leather or any other similar material and/or they can be shaped according to an approximately triangular shape with rounded corners and be structured so as to hold the connection rings 5.

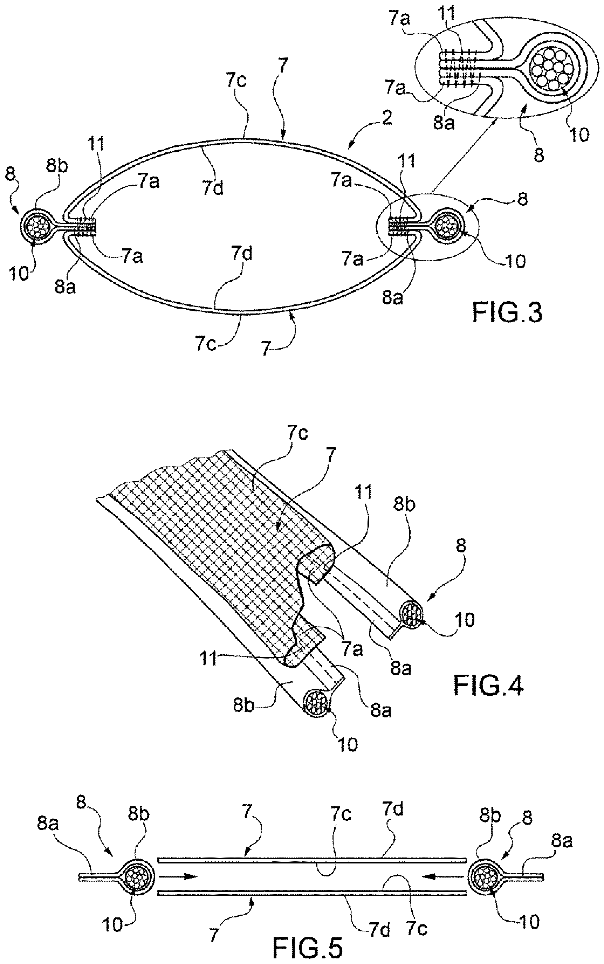

With reference to a preferred embodiment shown in Figures 3 and 4, the strap 2 comprises a sleeve, which can be formed by two web elements 7 mutually connected along the relative two longitudinal lateral strips 7a by means of a pair of lateral tapes 8, each firmly trapped between the two adjacent lateral strips 7a of the two web elements 7.

According to an explanatory embodiment shown in Figure 3, the web elements 7 can preferably have a shape and/or sizes that are approximately equal to one another, for example an approximately flat and rectangular elongated shape so as to have the relative longitudinal lateral strips 7a that approximately match one another. The web element 7 can comprise, for example, a strip of fabric, preferably - though not necessarily - an elastic, soft, conveniently mesh-like or perforated fabric.

According to an explanatory embodiment shown in Figures 3 and 4, the lateral tape 8 can be made of fabric and/or of a plastic material. Preferably, the tape 8 can have a polyester or cotton base. Conveniently, at least the outer surface of the tape 8 can partially or completely be made of a reflecting material, for example a reflector (retroreflector) material. Preferably, the reflecting material can comprise, for example, a silver reflecting material. According to a preferred embodiment shown in figure 4, the tape 8 can conveniently be shaped so as to have a longitudinal flat portion 8a and a thicker portion 8b defining a longitudinal lateral edge 9 having a greater thickness than the flat portion 8a.

According to a preferred embodiment, the flat portion 8a of the tape 8 is interposed between the two adjacent longitudinal lateral strips 7a folded toward the inside of the sleeve, so as to remain concealed between them. The portion 8b of the tape 8 is arranged so as to protrude from the two strips 7a of the two web elements 7 toward the outside of the sleeve formed by the strap 2, so as to remain visible. Preferably, the flat portion 8a of the tape 8 and the two strips 7a of the two web elements 7 are firmly stitched to one another so as to form a seam 11 defining a predetermined coupling band. Preferably, the seam is a yarn seam, preferably straight and parallel to the tape 8.

According to an explanatory embodiment, the tape 8 cab be longitudinally folded so as to wrap, in the area of the portion 8b, an inner cord 10. In other words, the portion 8b can correspond to the portion of tape 8 surrounding the inner cord 10 so as to wrap it. On the other hand, the portion 8a can correspond to the two opposite greater lateral strips of the tape 8, which protrude from the portion 8b and at least partially overlap one another. The cord 10 can be sized so as to thicken the portion 8b, so as to conveniently define a lateral hem or border of the strap 2. The Applicant found it advantageous to use an inner cord 10 having an approximately circular cross section. For example, the cord 10 can correspond to a "rattail" cord. However, the cord 10 can have any cross section other than a circular one.

According to a preferred embodiment shown in Figure 3, the longitudinal lateral strips 7a of the two web elements 7 are at least partially folded longitudinally towards the inside of the sleeve so as to be approximately parallel and adjacent to one another, whereas the flat portion 8a of the tape 8 rests against the outer faces of the strips 7a facing one another. The flat portion 8a is stitched to the strips 7a so that the strips and the seam 11 conveniently remain concealed inside the sleeve and the portion 8b protrudes from the latter, so that is is visible. The seam 11 can be made on the folded longitudinal strips 7a and on the flat portion 8a along an approximately straight line parallel to - and obtained beside - the portion 8b, preferably close to the latter.

With reference with Figures 5-12, hereinafter is a description of a preferred embodiment of the method to make the accessory article 1. In order to make the disclosure of the invention as clear as possible, the description relates, by mere way of non-limiting example, to a method to make a particularly simple accessory article 1 corresponding to the harness shown in Figures 1 and 2.

With reference to Figures 5-11, the method comprises the step of manufacturing the two straps 2. With reference to Figure 5, the creation of each strap 2 comprises the step of providing two web elements 7 and the two tapes 8. The two web elements 7 can be obtained by carrying out a cutting operation, preferably on a multi-layer mattress of fabric according to a predetermined cutting shape, which depends on the shape of the strap 2 to be manufactured. Preferably, the cutting operation can be carried out by means of a dinking die shaped like the outer profile of the web element 7 and operated by a dinking machine (not shown), or by means of an electronically controlled cutting system provided with a fabric blade (saw) and/or LASER blade or the like (not shown) . Each web element 7 has an outer face 7c, which is adapted to form, in use, the visible face of the strap 2 of the article 1, and an inner face 7d, which is adapted to form, in use, the concealed face of the strap 2.

The method comprises the step of superimposing the two web elements 7 so that the outer faces 7c mutually face one another and the inner faces 7d face outward. The web elements 7 are superimposed in such a way that each strip 7a of a web element 7 is approximately aligned with the corresponding strip 7a of the other web element 7.

The method further comprises the step of placing the two tapes 8 between the two respective pairs of strips 7a of the web elements 7.

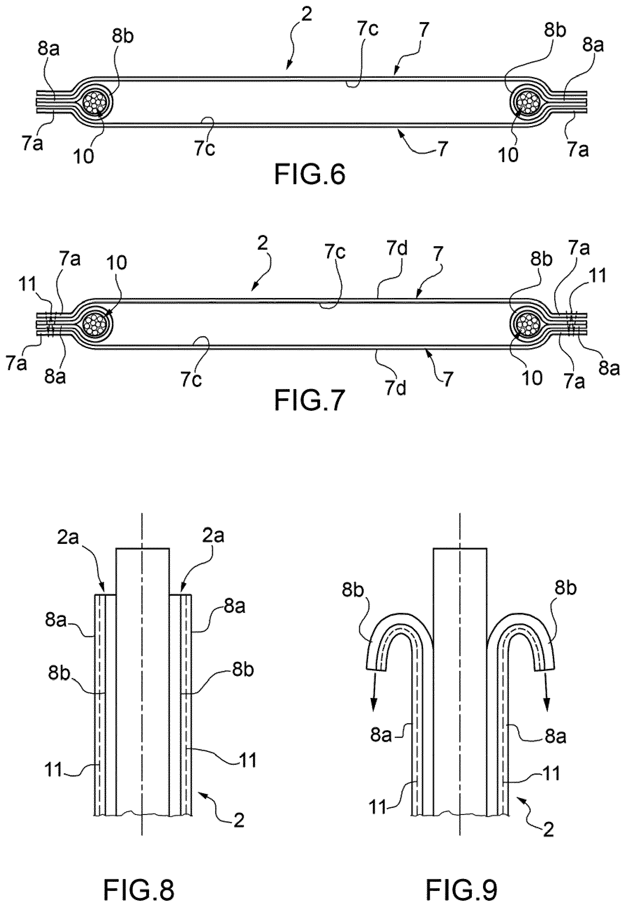

With reference to Figure 6, the tapes 8 are placed between the two respective strips in such a way that the respective portions 8b, namely the portions containing the cord 10, face one another in the inner part of the web elements 7, whereas the flat portions 8a, on the contrary, are arranged between the two strips of the web elements 7 facing outward from them. Preferably, the tape 8 can be arranged in such a way that the outer lateral edge of its portion 8a approximately coincides with the outer lateral edge of the two overlapping strips 7a of the web elements 7.

With reference to Figure 7, the method further comprises the step of stitching the two pairs of strips 7a of the web elements 7 along the portion 8a of the tape 8, so as to firmly fix the latter to the strips. Preferably, the seam 11 cam be made on the two strips of the web elements 7 along a preferably straight longitudinal direction immediately close to the portion 8b, preferably parallel to the latter. The same operation is carried out on the other tape 8, as well, and determines the formation of the sleeve. Preferably, the seam 11 can be made on the two web elements 7 and on the tapes 8 by means of a sewing machine, which allows them to be fixed to one another, with one single operation, so as to form the sleeve.

The invention is not limited to a seam, but it can involve other types of fixing solutions, such as for example heat-welding or other similar fixing techniques.

With reference to Figures 8, 9 and 10, the method further comprises the step of axially tuning up the sleeve making up the strap 2 so that the seam 11 remains concealed inside the sleeve and the portion 8b, namely the portion thickened by the cord 10, protrudes from the web elements 7 of the strap 2 in order to be visible.

The turning up operation can e be carried out, for example, by fitting the sleeve onto a properly sized rod 12, so that the sleeve can be at least partially tensioned both radially and longitudinally (Figure 8). The turning up operation can further involve getting hold of an end 2a of the sleeve and axially drag it toward the opposite end 2a on the portion of the sleeve wrapping the rod 12 (Figure 9) . During the turning up operation, the opposite end 2a can be kept in its starting position by a locking member 13. For example, the rod 12 can be kept in a fixed position, while the locking member can be operated by an electromechanical system controlled by an operator and comprise a mechanism, which is structured so as to clamp/lock the end 2a of the sleeve against the rod 2. To this aim, the Applicant found out that it could be possible to use a machine designed to "turn up stockings" (not shown), which is provided with a fixed vertical rod, onto which the sleeve is fitted, and with a vertical pin, which is coaxial to the rod and is axially movable from and to the end of the rod so as to strike, according to the controls provided, against the rod itself in order to clamp the (closed) end 2a of the sleeve fitted on the rod.

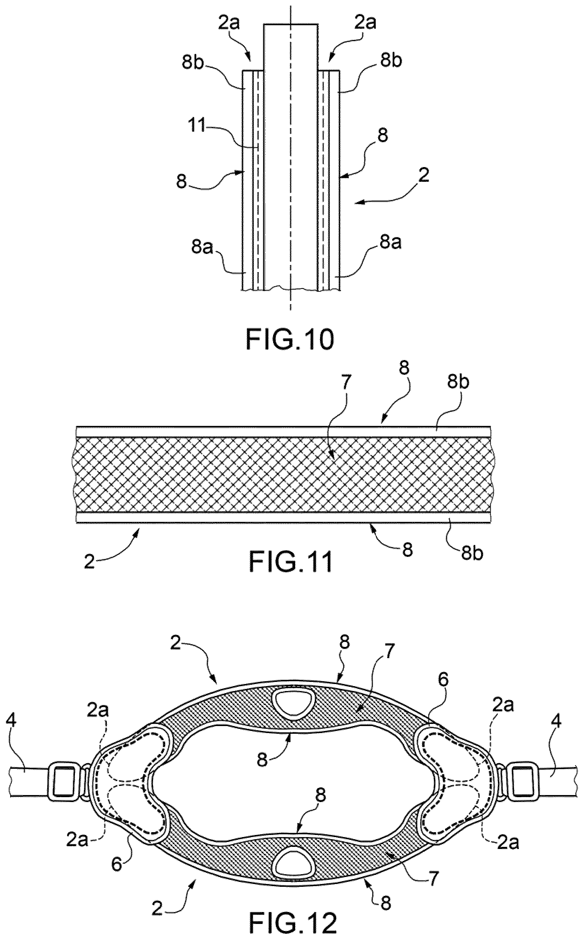

The method can further comprise the step of removing the sleeve from the rod 12 (Figure 10).

The operations described above can be repeated in order to manufacture the second strap 2.

Once the two straps 2 have been manufactured, a connection operation can be carried out in order to connect the distal ends 2a of the two straps 2, preferably by stitching the patches 6 on the straps creating a seam 15 (Figure 12). During this step, the rings 5 can preferably be connected to the straps 2, for example, through strings folded and stitched at the ends of the straps 2.

The method described above offers the grate advantage of ensuring the presence of seams arranged in the inner part of the sleeve. In this way, on one side, the seams do not come into contact with the coat of the animal - with all the benefits deriving therefrom in terms of reduction of the abrasion of the latter - and, on the other hand, the appearance of the accessory article improves.

Finally, it is clear that the method and the accessory article described above can be subjected to changes and variations, without for this reason going beyond the scope of protection of the invention defined in the appended claims.

For example, according to a different embodiment (not shown), the accessory article 1 can comprise a tubular sleeve consisting of one single web element 7 and one single tape 8. In this case, the method involves superimposing the two opposite longitudinal strips of the same web element 7 so as to longitudinally fold it approximately in half in order to obtain the sleeve in which the outer face 8c faces the inside thereof; interposing, between the two superimposed strips of the web element 7, the tape 8, which is positioned so as to have the portion 8b oriented toward the inside of the sleeve and the portion 8a trapped between the two strips and facing the outside of the sleeve; firmly stitching the two lateral strips along the portion 8a of the tape 8 so that the seam 11 is visible on the outside of the sleeve; and axially turning up the sleeve so that the outer faces 7c of the web elements 7 face the outside of the sleeve and the seam 11 is on the inside of the sleeve, while, on the contrary, the portion 8b is on the outside of the sleeve. The Applicant found out that this variant is particularly convenient when manufacturing an accessory article having a small width and significant length, for example corresponding to a leash.

## Claims

1. Method to make an accessory article (1) for pets;
said accessory article (1) being provided with at least one strap (2) comprising a sleeve having an elongated shape having at least two longitudinal lateral strips mutually superimposed so as to trap a tape (8) and are connected thereto along a predetermined coupling band (11); said tape (8) being provided with a first longitudinal lateral portion (8a) stably trapped between said two longitudinal lateral strips and a second longitudinal lateral portion (8b) that protrudes to the outside thereof;
said method being **characterized in that** it comprises the steps of:
- arranging at least one tape (8) between said two superimposed longitudinal lateral strips of said sleeve so that said second longitudinal portion (8b) is facing the inside of the sleeve and said first longitudinal portion (8a) is facing the outer lateral edge of said two longitudinal lateral strips;
- stably coupling said two lateral strips with the tape (8) so as to produce said coupling band along said first longitudinal lateral portion (8a) of the tape (8);
- axially turning up said sleeve so that said two longitudinal lateral strips, said first longitudinal lateral portion (8a) and said coupling band are arranged concealed inside said sleeve and said second longitudinal lateral portion (8b) of the tape (8) is arranged outside the sleeve.

2. Method according to claim 1, wherein said sleeve comprises two web elements (7) mutually connected along the related two adjacent longitudinal lateral edges (7a) by means of a pair of lateral tapes (8), each of which is stably trapped between two related adjacent strips of the two web elements (7);
said method comprises the steps of:
- providing at least two tapes (8);
- providing two web elements (7), each of which has an outer face (7c) adapted to form the outer face of the strap (2) and an inner face (7d) adapted to remain concealed inside the strap (2) ;
- superimposing the two web elements (7) with the outer faces (7c) mutually facing;
- arranging each tape (8) between a longitudinal lateral strip of a web element (7) and the adjacent longitudinal lateral strip of the other web element (7) so that said second longitudinal portion (8b) is arranged between the two outer faces (7c) of the two web elements (7) facing the inside of the sleeve and said first longitudinal portion (8a) is facing the outer lateral edge of said two longitudinal lateral strips;
- stitching each longitudinal portion (8a) of the tapes (8) with the respective two adjacent strips of the web elements (7) so as to form one or more coupling bands;
- axially turning up the sleeve so that said two pairs of longitudinal lateral strips, said first longitudinal lateral portions (8a) of said tapes and said seam/s are arranged concealed inside said sleeve and said second longitudinal lateral portions (8b) of said tapes (8) are arranged outside the sleeve.

3. Method according to claim 1 or 2, wherein said tape (8) comprises an inner cord (10) arranged in the second longitudinal portion (8b).

4. Method according to any one of the dependent claims, wherein said tape (11) is made at least partially of a reflecting material.

5. Method according to claim 2, wherein said web elements are made of perforated fabric.

6. Accessory article for pets **characterized by** comprising at least one strap (2) comprising, in turn, a sleeve having an elongated shape having at least two longitudinal lateral strips mutually superimposed so as to trap a tape (8) and are connected thereto along a predetermined coupling band (11); said tape (8) being provided with a first longitudinal lateral portion (8a) stably trapped between the said two longitudinal lateral strips and a second longitudinal lateral portion (8b) that protrudes to the outside thereof; said longitudinal lateral strips being folded at least partially inside said sleeve so that said two pairs of longitudinal lateral strips, said first longitudinal lateral portions (8a) of said tapes and said seam/s are arranged inside said sleeve so as to remain concealed, and said second longitudinal lateral portions (8b) of said tapes (8) are arranged on the outside of the sleeve.

7. Accessory article for pets according to claim 6, wherein said sleeve comprises two web elements (7) mutually stitched along the related two adjacent longitudinal lateral edges (7a) by means of a pair of lateral tapes (8), each of which is stably trapped between two related adjacent strips of the two web elements (7);
the two longitudinal lateral strips of each pair of strips being folded at least partially inside said sleeve so that said first longitudinal lateral portions (8a) of said tapes (8) and said seam/s are arranged concealed inside said sleeve and said second longitudinal lateral portions (8b) of said tapes (8) are arranged on the outside of the sleeve.

8. Accessory article for pets according to claim 7, wherein said tape (8) comprises an inner cord (10) arranged in the second longitudinal portion (8b).

9. Accessory article for pets according to claim 7, wherein said tape (11) is made at least partially of reflecting material.

10. Accessory article for pets according to claim 7, wherein said web elements are made of perforated fabric.
